# EUROPÄISCHE PATENTSCHRIFT

(11) **EP 1 175 314 B1**
(45) Veröffentlichungstag und Bekanntmachung des Hinweises auf die Patenterteilung: **09.10.2002**
(21) Anmeldenummer: 99973838.8
(22) Anmeldetag: 06.05.1999
(51) Int. Cl.: B60P 7/12

(54) **FRACHTSYSTEM FÜR DEN TRANSPORT VON TIEFDRUCKPAPIERROLLEN**
FREIGHT SYSTEM FOR TRANSPORTING GRAVURE PAPER ROLLS
SYSTEME DE FRET POUR LE TRANSPORT DE ROULEAUX DE PAPIER HELIOGRAPHIQUE

(43) Veröffentlichungstag der Anmeldung: 30.01.2002
(73) Patentinhaber: Rail & Sea Speditions-GmbH, 5204 Strasswalchen (AT)
(72) Erfinder: GREISBERGER, Robert, A-5204 Strasswalchen (AT)
(74) Vertreter: Stenger, Watzke & Ring Patentanwälte
(86) Internationale Anmeldenummer: EP9903109
(87) Internationale Veröffentlichungsnummer: WO00068036

(56) Entgegenhaltungen:
- EP-A- 0 318 960
- DE-A- 4 410 935
- GB-A- 2 121 759
- US-A- 2 862 631
- US-A- 2 962 167
- US-A- 3 894 495
- US-A- 5 755 541

## Beschreibung

Die Erfindung betrifft ein Frachtsystem für den Transport von waagerecht liegend angeordneten Tiefdruckrollen im Landfahrzeug, insbesondere Eisenbahnwaggon, zum Hafen und für eine sich anschließende Verschiffung. Ein Frachtsystem nach dem Oberbegriff des unabhängigen Anspruchs 1 ist z.B. aus der US-A-2 862 631 bekannt. Weitere Frachtsysteme sind aus US-A-5 755 541, EP-A-0 318 960 und US-A-2 962 167 bekannt. Bei solchen Frachtsystemen sind zusätzlich auch zum Einsatz kommende Förderfahrzeuge z.B. aus GB-A-2 121 759 und DE-A-44 10 935 bekannt.

Für die Erstellung von Druckschriften, insbesondere Magazinen und Zeitschriften, werden Tiefdruckpapierrollen, auch Tiefdruckrollen genannt, gebraucht, die unterschiedliche Maße aufweisen können. Dabei bereitet der Transport insbesondere dann Schwierigkeiten, wenn die Tiefdruckrollen größere Maße aufweisen, etwa Breiten von 2,60 m bis 3,60 m, Durchmesser von 1,25 m und Gewichte von 3500 kg und 6000 kg. Derartige "Jumbo"-Tiefdruckrollen werden bislang mit Greifwerkzeugen stehend oder liegend im Eisenbahnwaggon angeordnet und dann zur Verschiffung in konventionellen Schiffen mehrfach umgeladen. Durch das vielfache Handling jeder einzelnen, nur durch eine Umhüllung geschützten Tiefdruckrolle besteht eine große Gefahr der Beschädigung, so daß vielfach enorme Transportwege, nämlich in die USA, mit Ausschußware bewältigt werden, die letztlich zur Erzeugung des Druckwerkes nicht mehr benutzt werden kann. Darüber hinaus ist an dem bisherigen Transportkonzept nachteilig, daß zum Versand jeweils mindestens 320 Tonnen an Tiefdruckrollen gesammelt werden müssen, bis der Transportvorgang selbst in die Wege geleitet werden kann, so daß in der Druckerei keine "Just-in-time"-Anlieferung der gerade benötigten Tiefdruckrollen möglich ist. Nachteiligerweise ist eine Transportdauer von sechs Wochen einzukalkulieren, womit der Nachteil verbunden ist, daß entsprechende Lagerbestände an den Verbrauchsorten aufrecht erhalten werden müssen.

Es sind daher bei der Anmelderin bereits Überlegungen angestellt worden, Tiefdruckrollen in Container zu verladen und den Transportvorgang in Containern durchzuführen. Dies läßt sich bis zu einer Rollenbreite von 2,60 m noch in stehender Anordnung der Tiefdruckrollen durchführen, jedoch nicht mit größeren Tiefdruckrollen-Breiten, für die ein stehender Transport im Container wegen zu geringer Containerhöhe nicht möglich ist. Auch schloß sich ein Transport der Rollen in liegender Positionierung im Container aus, da die Ladebreite des Containers nur 2,35 m beträgt, so daß es nicht möglich war, zwei Tiefdruckrollen mit einem Durchmesser von jeweils 1,25 m nebeneinander im Container anzuordnen, da hierfür eine Ladebreite von 2 x 125 m = 2,50 m benötigt würde.

Der Erfindung liegt die **Aufgabe** zugrunde, einen Transport von Tiefdruckrollen mit Breiten von größer 260 cm, insbesondere 290 cm bis 360 cm, in standardisierten Frachtbehältern (Containern) zu ermöglichen und hierbei unter Meidung der oben genannten Nachteile des bekannten Transports dieser Produkte den im standardisierten Frachtbehälter zur Verfügung gestellten Laderaum weitestgehend auszunutzen, wobei das Handling der Tiefdruckrollen beschädigungssicher über den ganzen Land- und Seetransportweg durchgeführt werden soll.

Die Aufgabe ist erfindungsgemäß durch ein Frachtsystem der eingangs genannten Art **gelöst**, das gekennzeichnet ist durch einen sowohl auf dem Landfahrzeug als auch auf dem Schiff anordbaren, an sich bekannten standardisierten Container zur Aufnahme der Tiefdruckrollen, wobei jede Tiefdruckrolle auf einem eigenen Verladegestell waagerecht liegend gelagert ist und jeweils zwei parallel nebeneinander angeordnete Tiefdruckrollen in der Höhe zueinander versetzt, das heißt diagonal zueinander, gelagert sind. Mit diesem Frachtsystem lassen sich Tiefdruckrollen in horizontaler Lage so in dem Frachtbehälter anordnen, daß der Laderaum auch bei Beladung mit Tiefdruckrollen größerer Breite als 260 cm weitestgehend ausgenutzt wird, wobei Handhabungsvorrichtungen ausschließlich am Verladegestell angreifen, so daß jegliche Beschädigungsgefahr für die empfindlichen Tiefdruckrollen vermieden ist.

Um den Versatz und damit zwangsläufig die angestrebte Verringerung der Ladebreite für nebeneinander angeordnete Tiefdruckrollen in einfacher Weise zu erreichen, wird in zweckmäßiger Ausgestaltung der Erfindung vorgeschlagen, ein Verladegestell für die bodennahe Lagerung einer ersten Tiefdruckrolle im Container und ein zweites Verladegestell für die Hochlagerung der zweiten Tiefdruckrolle vorzusehen, wobei die Lagerungsebenen der beiden Verladegestelle mindestens um den Radius der Tiefdruckrollen in der Höhe voneinander beabstandet sind. Als Förderfahrzeug für die Be- und Entladung des Containern mit auf Verladegestellen in obiger Weise gelagerten Tiefdruckrollen kann ein Hubwagen bzw. vorzugsweise eine Schwerlastameise gemäß später beschriebener Merkmalskombination verwendet werden.

Insgesamt werden mit diesem Frachtsystem wesentlich kürzere Transportzeiten vom europäischen Herstellungsort der Tiefdruckrollen bis in die USA zur Druckerei von nur ca. 14 Tagen erzielt, ist ein Einzelcontainer-Versand ohne Zusatzkosten möglich, werden weniger Handlings der einzelnen Tiefdruckrollen erforderlich und diese darüber hinaus derart durchgeführt, daß die Tiefdruckrolle selbst nicht von dem Handlingwerkzeug erfaßt wird, ergeben sich günstigere Transportkosten, insbesondere auch durch die Verringerung der Lagergeldbelastung und ist eine "Just-in-time"-Zustellung logistisch durchführbar.

Für den Transport der oben beschriebenen Jumbo-Papierrollen sind besondere Verladegestelle entwickelt worden. Diese zeichnen sich erfindungsgemäß durch ein bodennah angeordnetes Untergestell, gegebenenfalls mit Füßen, aus, mit dem ein darüber angeordneter Aufbau mit einer Auflage zur horizontalen Lagerung der Tiefdruckrolle in der gewünschten Höhe angeordnet ist. Gemäß einer vorteilhaften Ausgestaltung des erfindungsgemäßen Verladegestells besteht der Aufbau aus zwei stirnseitig am Untergestell angeordneten Tragelementen, welche an einem Ende mit dem Untergestell verbunden sind und an dem anderen Ende die Auflage halten. Die Tragelemente können auch in der Höhe verstellbar ausgebildet sein, zum Beispiel teleskopartig. Vorteilhafterweise sind die Tragelemente schwenkbar an dem Untergestell gelagert, so daß der Aufbau zusammenklappbar ist. Dadurch, daß die Verladegestelle bei Nichtgebrauch auf diese Weise zusammenklappbar sind, lassen sich nach dem Transport der Tiefdruckrollen die erfindungsgemäßen Verladegestelle zusammengeklappt in großer Zahl in einem Frachtbehälter zurückführen. Beispielsweise ist es möglich, in einem Standard-Container eine Rückführung von bis zu 70 Verladegestellen durchzuführen.

Gemäß einer weiteren vorteilhaften Ausgestaltung des erfindungsgemäßen Verladegestells weist der Aufbau zur Stabilisierung Verstrebungen auf, die sich im Verladezustand zwischen den zwei Tragelementen erstrecken und fixierbar sind.

Gemäß obiger Beschreibung ist vorgesehen, ein Verladegestell für die bodennahe Lagerung einer ersten Tiefdruckrolle und ein zweites Verladegestell für die Hochlagerung der zweiten Tiefdruckrolle auszubilden, wobei deren Auflage in der Höhe gegenüber dem Untergestell im wesentlichen um mindestens den Radius der aufzunehmenden Tiefdruckrolle versetzt ist. Hierdurch lassen sich die Tiefdruckrollen mit einer größtmöglichen Packungsdichte in einem Standard-Frachtbehälter anordnen. Gemäß einem weiteren Vorschlag der Erfindung ist die Auflage flächig gekrümmt ausgebildet an den Durchmesser einer aufzunehmenden Tiefdruckrolle angepaßt, vorzugsweise an einen Durchmesser von ca. 125 cm. Durch die gekrümmte, mit dem Krümmungsradius an den entsprechenden Radius der aufzunehmenden Tiefdruckrolle angepaßten Auflagefläche sind Tiefdruckrollen positionierungssicher und rollfest lagerbar und können beschädigungsfrei transportiert als auch gehandhabt werden.

Dabei kann zweckmäßigerweise die Auflagefläche rutschfest ausgebildet sein, vorzugsweise mit einem rutschfesten Belag versehen sein, wodurch zum einen die Sicherheit der Lagerung der auf dem Verladegestell angeordneten Tiefdruckrolle weiter erhöht und zum anderen das Risiko von Beschädigungen von Tiefdruckrollen durch das Verladegestell selbst reduziert wird. Schließlich können am Untergestell seitlich Gurthalterungen zur Festlegung der Tiefdruckrolle angeordnet sein.

Um in einfacher Weise einem Förderfahrzeug zu ermöglichen, das oben beschriebene Ladegestell mit Tiefdruckrolle zu erfassen und einen Container zu beladen oder zu entladen, sind am Untergestell Längsführungen vorgesehen, die eine sichere Aufnahme für ein das Untergestell im Verladezustand untergreifendes Lastaufnahmemittel des Förderfahrzeugs in Längsrichtung, das heißt parallel zur Längsachse der Tiefdruckrolle, ermöglichen. Damit ist ein Transport des Verladegestells inklusive der Tiefdruckrolle mit Gewichten bis zu größer sechs Tonnen durchführbar.

Verfahrensmäßig wird mit der vorliegenden Erfindung ein Verfahren zum Beladen von Frachtbehältern mit Tiefdruckrollen vorgeschlagen, welches dadurch gekennzeichnet ist, daß die Tiefdruckrollen in horizontaler Lage auf je ein Verladegestell geladen und dann nacheinander derart in dem Frachtbehälter angeordnet werden, daß zwei parallel nebeneinander liegende Tiefdruckrollen im Beladezustand in der Höhe zueinander versetzt und in Querrichtung einander überlappend angeordnet werden, wobei vorzugsweise der Unterschied in der Höhe der Anordnung der beiden Tiefdruckrollen mindestens dem Radius einer Tiefdruckrolle entspricht. Durch die Versetzung in der Höhe wird die einander überlappende Anordnung in Querrichtung möglich, so daß sich die Gesamtlagerungsbreite verringert. Durch die Versetzung der beiden parallel nebeneinander liegenden Tiefdruckrollen in der Höhe und die Überlappung in der Breite ergibt sich eine diagonale Anordnung der Tiefdruckrollen, wodurch sich verfahrensgemäß auch Tiefdruckrollen größerer Breiten mit Standard-Frachtbehältern unter größtmöglicher Laderaumausnutzung transportieren lassen. Dabei findet jeder Handhabungsvorgang für eine Tiefdruckrolle im Verbund gemeinsam mit dem zugehörigen Verladegestell statt, wobei es zweckmäßig ist, die Tiefdruckrolle beispielsweise mit Gurten am Verladegestell zu fixieren.

Schließlich wird mit der vorliegenden Erfindung ein Förderfahrzeug, insbesondere ein Gabelstapler, eine Ameise oder dergleichen, zum Be- oder Entladen von Frachtbehältern mit auf Verladegestellen angeordneten Tiefdruckrollen vorgeschlagen, welches durch ein verlängertes Lastaufnahmemittel von bis zu 3 m für eine Erfassung des Verladegestells von unten parallel zur Längsachse der Tiefdruckrolle ausgebildet ist, eine Hubfähigkeit von bis zu sechs Tonnen, eine Hubhöhe von bis zu 10 cm und eine Unterfahrhöhe von bis zu 20 cm besitzt.

Weitere Einzelheiten, Merkmale und Vorteile der Erfindung ergeben sich aus der nachfolgenden Beschreibung der zugehörigen Zeichnungen, in denen bevorzugte Ausführungsbeispiele der Erfindung schematisch dargestellt sind. In den Zeichnungen zeigen:
- Fig. 1: eine schematische Darstellung des Problems und des Lösungsprinzips des endungsgemäßen Tiefdruckrollen-Transports im Container;
- Fig. 2: eine Innenansicht eines mit zwei auf Verladegestellen angeordneten Tiefdruckrollen teilweise beladenen Containers;
- Fig. 3: eine perspektivische Darstellung eines Verladegestells in Längsrichtung;
- Fig. 4: das Verladegestell der Fig. 3 perspektivisch in Querrichtung;
- Fig. 5: das Verladegestell der Fig. 1 für die bodennahe Lagerung und der Fig. 4 für die Hochlagerung mit aufliegenden Tiefdruckrollen und
- Fig. 6: eine schematische, perspektivische Seitenansicht einer nicht zur Erfindung gehörenden Schwerlastameise für die Be- und Entladung von Containern mit auf Verladegestellen angeordneten Tiefdruckrollen.

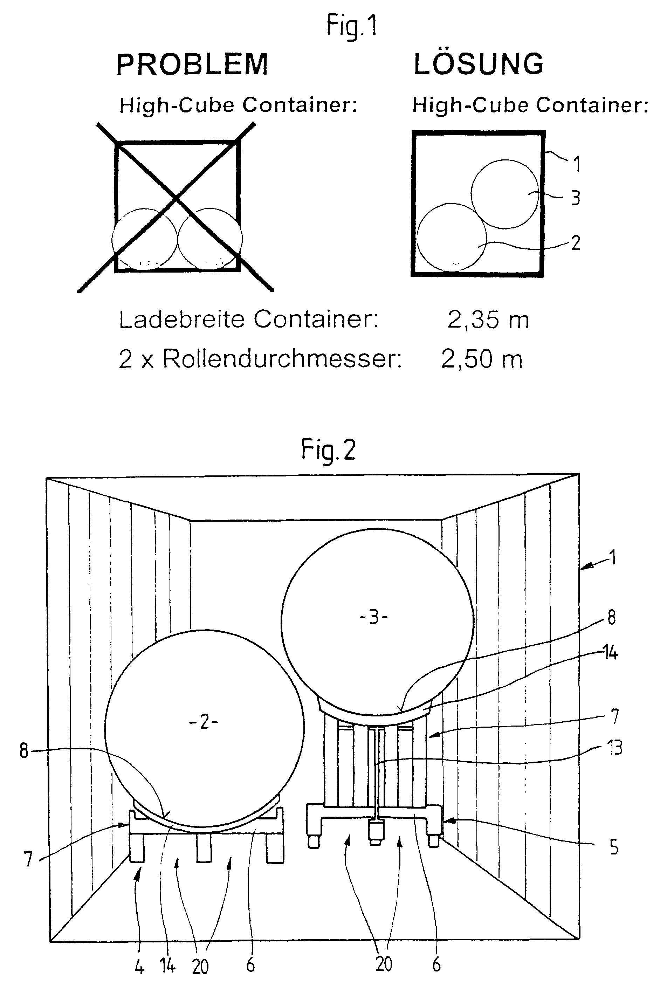

Fig. 1 verdeutlicht das bestehende Problem beim Transport von Tiefdruckpapierrollen, deren Durchmesser 1,25 m beträgt und die aufgrund ihrer Breite von größer 2,60 m im Container nicht stehend verladen werden können, da die Containerhöhe zu gering ist. Die Ladebreite eines Standard-Containers beträgt 2,35 m. Zwei Tiefdruckrollen mit jeweils einem Durchmesser von 1,25 m erfordern jedoch in der deshalb allein möglichen liegenden Anordnung eine Ladebreite von 2,50 m. Sie passen also nicht in den Container, wie in der linken Darstellung der Fig. 1 schematisch dargestellt ist.

Die rechte Darstellung verdeutlicht die erfindungsgemäße Lösung des Problems der Verladung solcher Tiefdruckrollen liegend im Standardcontainer 1, der eine Ladebreite von 2,35 m und eine Ladehöhe von 2,60 m aufweist. Die beiden dargestellten Tiefdruckrollen 2, 3, die eine Breite von 2,90 m bis 3,60 m haben können, einen Durchmesser von 1,25 m aufweisen und ein Gewicht von 3500 kg bis 6000 kg besitzen, werden liegend horizontal im Container angeordnet, wobei die zweite Rolle 3 oberhalb der ersten Rolle 2 angeordnet ist, so daß ein Diagonal-Ladeprinzip verwirklicht ist. Durch das Versetzen der beiden parallel nebeneinander angeordneten Tiefdruckrollen 2, 3 in der Höhe zueinander, also die Hochlagerung der zweiten Tiefdruckrolle 3, läßt sich - in Querrichtung gesehen - eine überlappende Anordnung verwirklichen, die die Ladebreite der beiden Tiefdruckrollen 2, 3 auf die Ladebreite des Containers von 2,35 m verringert, wie Fig. 1 der Zeichnung verdeutlicht.

Um in einfacher Weise den Versatz der zwei parallel nebeneinander liegenden Tiefdruckrollen 2, 3 in der Höhe gegeneinander zu erzielen und in Querrichtung eine Anordnung zueinander zu ermöglichen, die - die Verladebreite verkürzend - überlappend ist, werden gemäß Fig. 2 der Zeichnung Verladegestelle 4, 5 zur horizontalen Lagerung der Tiefdruckrollen 2, 3 verwendet. Dabei erlaubt das nur eine geringe Höhe aufweisende Verladegestell 4 eine bodennahe Anordnung der Tiefdruckrolle 2, während die Auflage der Tiefdruckrolle 3 auf dem Verladegestell 5 in einer Höhe erfolgt, die über der horizontalen Mittelebene der Tiefdruckrolle 2 angeordnet ist, so daß die einander überlappende Anordnung in Querrichtung mit der erwünschten Gesamtbreitenverringerung der Lagerung ermöglicht ist. Jedes Verladegestell 4 bzw. 5 weist ein aus einem geschweißten Rahmenwerk aus Stahl bestehendes Untergestell 6 und einen mit dem Untergestell 6 verbundenen Aufbau 7 auf, welcher oberhalb des Untergestells 6 eine Auflagefläche 8 zur horizontalen Lagerung einer Tiefdruckrolle 2 bzw. 3 bereitstellt. Die Auflagefläche ist dabei für die Lagerung der Tiefdruckrolle 2 bodennah, das heißt direkt aufliegend auf dem Untergestell 6, angeordnet, während die Auflagefläche für die Lagerung der Tiefdruckrolle 3 erhöht oberhalb der horizontalen Mittelebene der Tiefdruckrolle 2 angeordnet ist.

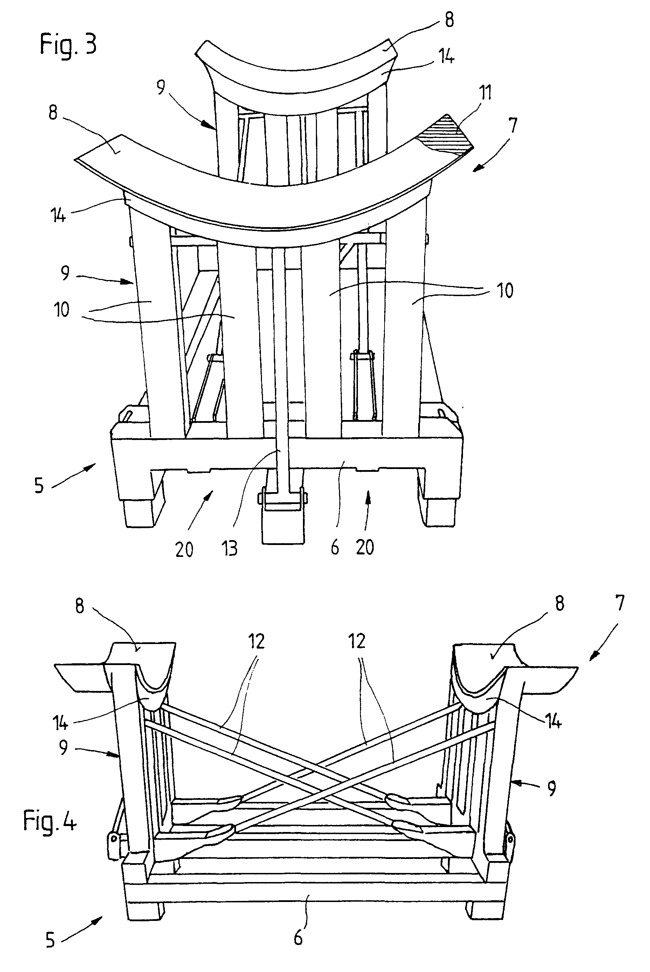

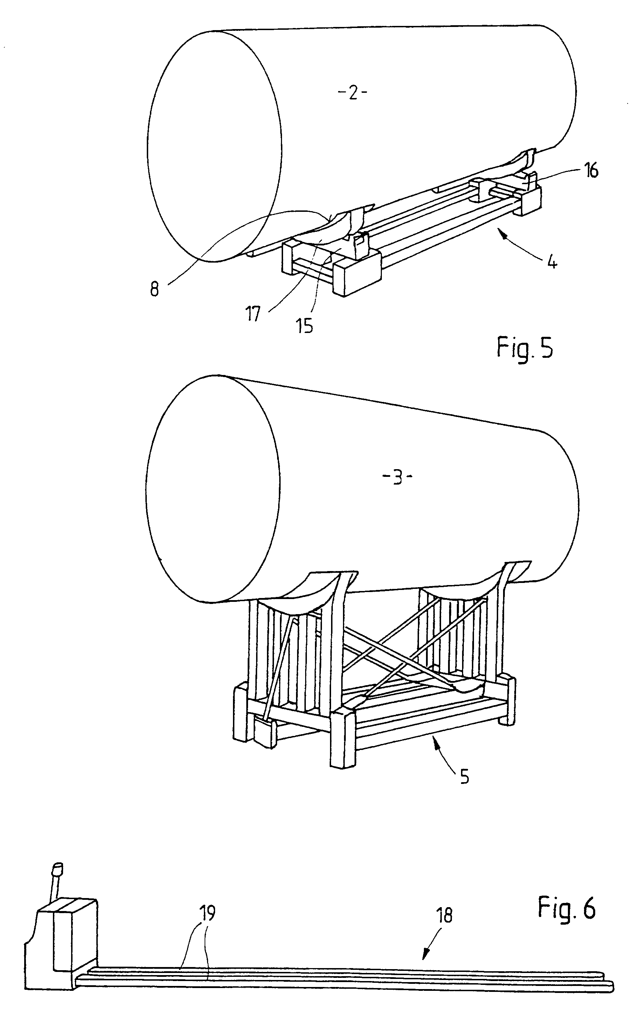

Die Fig. 3 und 4 zeigen den zugehörigen konstruktiven Aufbau des Lagegestells für die erhöhte Tiefdruckrollenlagerung.

Grundsätzlich weist das Verladegestell 5 gemäß den Fig. 3 und 4 ein im wesentlichen rechteckiges Untergestell 6 mit einer darauf angeordneten Auflagefläche 8 auf. Der die Auflage 8 tragende Aufbau 7 ist dabei aus zwei stirnseitig am Untergestell 6 angeordneten Tragelementen 9 ausgebildet, die jeweils an einem Ende mit dem Untergestell 6 verbunden sind und an dem anderen Ende die Auflagefläche 8 tragen. Die Tragelemente 5 sind aus einem verschweißten Rahmenwerk ausgebildet, welches vier im Verladezustand vertikal zum Untergestell 6 verlaufende Pfosten 10 aufweist. Mit diesen ist die Auflagefläche 8 über eine verbindende Quertraverse 14 verschweißt, die gekrümmt ausgebildet sind. Die Krümmung ist der Zylinderform der aufzunehmenden Tiefdruckrolle 3 angepaßt. Jede Auflagefläche 8 ist mit einem rutschfesten Belag 11 aus einem sandgestrahlten Linoleum versehen. Zur Erhöhung der Festigkeit weist der Aufbau 7 vier Verstrebungen 12 auf, welche lösbar angeordnet sind und sich im Verladezustand zwischen den zwei Tragelementen 9 diagonal verlaufend erstrecken. Ergänzt werden diese inneren Verstrebungen 12 des Verladegestells durch jeweils eine mittig angeordnete Außenverstrebung 13, die das Untergestell 6 mit der teilkreisförmigen Quertraverse 14 verbindet, die mit den oberen Enden der Pfosten 10 verschweißt ist und jeweils die Auflagefläche 8 trägt.

Die Tragelemente 9 sind in ihren Lagern am Untergestell 6 einschwenkbar gelagert (zeichnerisch nicht dargestellt), so daß nach Lösen der Verstrebungen 12, 13 die Möglichkeit gegeben ist, den Aufbau in den dann freien Innenraum des Verladegestells einzuschwenken und damit das Verladegestell zusammenzuklappen, um einen Leertransport raumökonomisch durchführen zu können.

Fig. 5 der Zeichnung stellt nochmals zur näheren Verdeutlichung das Verladegestell 4 für die bodennahe Lagerung der Tiefdruckrolle 2 und das Verladegestell 5 für die erhöhte Lagerung der Tiefdruckrolle 3 einander gegenüber, wobei das Verladegestell 4 dergestalt modifiziert sein kann, daß anstelle eines vollständigen Untergestells in reduzierter Form nur zwei Auflagekonsolen 15, 16 für die Tiefdruckrolle 2 verwendet werden, die jeweils eine der Krümmung der Tiefdruckrolle 2 angepaßte Quertraverse 17 aufweisen, an welcher jeweils die Auflagefläche 8 befestigt.ist.

Fig. 6 zeigt in einer schematischen perspektivischen Seitenansicht ein Förderfahrzeug 18, vorliegend eine sogenannte Ameise, zum Be- und Entladen von Containern 1 mit auf Verladegestellen 4, 5 angeordneten Tiefdruckrollen 2, 3. Das Förderfahrzeug 18 weist dabei zwei parallel verlaufende, in der Höhe verfahrbare Lastaufnahmemittel 19 mit einer Länge von bis zu 3,0 m, einer Hubhöhe von bis zu 10 cm, einer Unterfahrhöhe von bis zu 20 cm und einer Hubfähigkeit von bis zu 6 Tonnen auf. Die Sitzposition einer das Förderfahrzeug bedienenden Person ist zur Verbesserung der Sicht beim Manövrieren zum Beoder Entladen erhöht.

Das Förderfahrzeug 18 erfaßt mit seinen Lastaufnahmemitteln 19 das jeweilige Untergestell 6 des bereits mit der Tiefdruckrolle versehenen Verladegestells in Längsrichtung, indem die Lastaufnahmemittel 19 in Längsführungen 20 unterhalb des Untergestells 6 eingefahren werden und sodann durch Verfahren in die Höhe das Verladegestell mit Tiefdruckrolle in der Gesamtheit angehoben wird. Damit ist es möglich, jeden direkten harten Angriff eines Hebezeugs oder dergleichen Lastmittel an der Tiefdruckrolle zu vermeiden und sämtliche Handhabungen zum Be- und Entladen schonend ohne Berührung des eigentlichen Ladeguts durchzuführen.

### Bezugszeichenliste

- 1: Standard-Container
- 2: Tiefdruckrolle
- 3: Tiefdruckrolle
- 4: Verladegestell
- 5: Verladegestell
- 6: Untergestell
- 7: Aufbau
- 8: Auflagefläche
- 9: Tragelemente
- 10: Pfosten
- 11: Linoleum-Auflage
- 12: Verstrebungen
- 13: Außenverstrebung
- 14: Quertraverse
- 15: Auflagekonsole
- 16: Auflagekonsole
- 17: Quertraverse
- 18: Ameise
- 19: Lastaufnahmemittel
- 20: Längsführungen

## Patentansprüche

1. Frachtsystem für den Transport von zwei nahezu identischen, kreiszylindrischen Gegenständen großer Breite und großen Durchmessers, die waagerecht liegend mit Hilfe eines Verladegestells derart auf einem Landfahrzeug gelagert sind, daß sie in der Höhe mindestens um ihren Radius versetzt und in einem waagerechten Abstand voneinander angeordnet sind, der kleiner als ihr Durchmesser ist,
**dadurch gekennzeichnet,**
**daß** für den Transport der als Tiefdruckrollen (2, 3) ausgebildeten Gegenstände sowohl mittels eines Landfahrzeuges, vorzugsweise Eisenbahnwaggons, als auch mittels eines Schiffes die Tiefdruckrollen (2, 3) in einem an sich bekannten, standardisierten Container (1) jeweils auf einem eigenen, separaten Verladegestell (4, 5) gelagert sind, das aus einem Untergestell (6) und zwei am Untergestell (6) angeordneten Tragelementen (9) mit teilzylindrischen, gekrümmten und dem jeweiligen Durchmesser der Tiefdruckrollen (2, 3) angepaßten Auflageflächen (8) besteht.

2. Frachtsystem nach Anspruch 1, **dadurch gekennzeichnet, daß** die Tragelemente (9) um eine quer liegende Achse verschwenkbar am Untergestell (6) angeordnet sind.

3. Frachtsystem nach Anspruch 1 oder Anspruch 2, **dadurch gekennzeichnet, daß** zum separaten Transport der Verladegestelle (4, 5) mittels eines Flurfördergerätes (18) jedes Verladegestell (4, 5) an seinem Untergestell (6) mit Längsführungen (20) versehen ist.

4. Frachtsystem nach einem der Ansprüche 1 bis 3, **dadurch gekennzeichnet, daß** die Tragelemente (9) mittels Verstrebungen (12) mit dem Untergestell (6) verbunden sind.

5. Frachtsystem nach mindestens einem der Ansprüche 1 bis 4, **dadurch gekennzeichnet, daß** die Auflagefläche (8) der Tragelemente (9) mit einem rutschfesten Belag (11) versehen ist.

6. Frachtsystem nach mindestens einem der Ansprüche 1 bis 5, **dadurch gekennzeichnet, daß** die Tragelemente (9) in der Höhe verstellbar, beispielsweise teleskopierbar sind.

7. Frachtsystem nach mindestens einem der Ansprüche 1 bis 6, **dadurch gekennzeichnet, daß** das Untergestell (6) seitlich angeordnete Gurthalterungen aufweist.

## Claims

1. Freight system for transporting two almost identical, circular cylindrical items of a large width and a large diameter, which are carried horizontally by means of a loading frame on a land vehicle such that they are staggered in height, at least by their radius, and are disposed at a horizontal spacing from one another which is smaller than their diameter,
**characterised in that**, for transporting the items, which are formed as gravure rolls (2, 3), both by means of a land vehicle, preferably a railway wagon, and by means of a ship, the gravure rolls (2, 3) are carried in a standardized container (1), which is known per se, each on an individual, separate loading frame (4, 5) consisting of an underframe (6) and two supporting elements (9), which are disposed on the underframe (6), with partially cylindrical, curved bearing surfaces (8) which are adapted to the respective diameter of the gravure rolls (2, 3).

2. Freight system according to Claim 1, **characterised in that** the supporting elements (9) are disposed on the underframe (6) so as to be pivotable about a transverse axis.

3. Freight system according to Claim 1 or Claim 2, **characterised in that**, in order to separately transport the loading frames (4, 5) by means of a ground-level conveyor (18), each loading frame (4, 5) is provided with longitudinal guides (20) at its underframe (6).

4. Freight system according to any one of Claims 1 to 3, **characterised in that** the supporting elements (9) are connected to the underframe (6) by means of strutting (12).

5. Freight system according to at least one of Claims 1 to 4, **characterised in that** the bearing surface (8) of the supporting elements (9) is provided with a non-slip covering (11).

6. Freight system according to at least one of Claims 1 to 5, **characterised in that** the supporting elements (9) are adjustable in height, for example telescopic.

7. Freight system according to at least one of Claims 1 to 6, **characterised in that** the underframe (6) comprises laterally disposed belt holders.

## Revendications

1. Système de fret destiné au transport de deux objets cylindriques circulaires presque identiques de grande largeur et de grand diamètre qui, à l'aide d'une structure de chargement, sont placés en position horizontale sur un véhicule terrestre de telle sorte qu'ils soient disposés en étant décalés en hauteur au moins de leur rayon, et à un écartement horizontal l'un de l'autre qui est inférieur à leur diamètre,
**caractérisé en ce que**,
pour le transport des objets agencés sous la forme de rouleaux de papier héliographique (2, 3), aussi bien au moyen d'un véhicule terrestre, de préférence un wagon de chemin de fer, qu'au moyen d'un bateau, les rouleaux de papier héliographique (2, 3) sont positionnés chacun dans un conteneur standardisé (1) en soi connu sur une structure de chargement (4, 5) séparée qui leur est propre, laquelle est constituée d'une structure inférieure (6) et de deux éléments de support (9) disposés sur la structure inférieure (6), comportant des surfaces d'appui (8) partiellement cylindriques, cintrées et adaptées au diamètre respectif des rouleaux de papier héliographique (2, 3).

2. Système de fret selon la revendication 1, **caractérisé en ce que** les éléments de support (9) sont disposés sur la structure inférieure (6) de façon à pouvoir pivoter autour d'un axe transversal.

3. Système de fret selon la revendication 1 ou la revendication 2, **caractérisé en ce que**, pour le transport séparé des structures de chargement (4, 5) au moyen d'un engin de manutention au sol (18), la structure inférieure (6) de chaque structure de chargement (4, 5) est munie de guidages longitudinaux (20).

4. Système de fret selon l'une quelconque des revendications 1 à 3, **caractérisé en ce que** les éléments de support (9) sont reliés à la structure inférieure (6) au moyen d'entretoises (12).

5. Système de fret selon l'une quelconque des revendications 1 à 4, **caractérisé en ce que** la surface d'appui (8) des éléments de support (9) est munie d'un revêtement antidérapant (11).

6. Système de fret selon l'une quelconque des revendications 1 à 5, **caractérisé en ce que** les éléments de support (9) sont réglables en hauteur, par exemple télescopiques.

7. Système de fret selon l'une quelconque des revendications 1 à 6, **caractérisé en ce que** la structure inférieure (6) comporte des retenues par sangle disposées latéralement.
